# EUROPEAN PATENT APPLICATION

(11) **EP 3 287 186 A1**
(43) Date of publication of application: **28.02.2018**
(21) Application number: 16185826.1
(22) Date of filing: 26.08.2016
(51) Int. Cl.: B01D 53/50, B01D 53/80, F23J 15/00, F23J 15/02

(54) **INTEGRATED SYSTEM COMPRISING A SPRAY DRYER ABSORBER AND FABRIC FILTERS**

(71) Applicant: General Electric Technology GmbH, 5400 Baden (CH)
(72) Inventor: RAFIDI, Nabil, 35241 Vaxjo (SE); TABIKH, Ali Mustapha, 35241 Vaxjo (SE)
(74) Representative: Foster, Christopher Michael

(57) **Abstract**

A compact flue gas cleaning system (20) and a process using the system (20) for removing/reducing plant (10) flue gas pollutants is provided. The compact flue gas cleaning system (20) is a spray dryer absorber and fabric filter integrated system (20) useful for flue gas desulfurization, and like flue gas acid gas removal/reduction, and reaction product separation from the flue gas to produce a cleaned flue gas for environmental release.

## Description

### Field of the Disclosure

The present disclosure is related to compact flue gas cleaning equipment and processes for removing and reducing plant flue gas pollutants. More specifically, the present disclosure is related to an integrated spray dryer absorber and fabric filter system for desulfurization, and like acid gas removal/reduction, of flue gas generated in a plant combustion unit.

### Background of the Disclosure

Combustion of fuel, particularly carbonaceous materials such as fossil fuels and waste, generates hot flue gas that contains impurities, such as mercury (Hg), sulfur oxides (SOₓ), nitrogen oxides (NOₓ), and particulates, such as fly ash, which must be removed or reduced to a more acceptable level prior to release of the treated or cleaned flue gas to the environment. In response to regulations in place in many jurisdictions, numerous processes and equipment systems have been developed to remove or reduce impurity levels and/or particulates in generated flue gas.

Typical methods of reducing flue gas particulates, Hg, NOₓ, and SOₓ impurities from fuel-powered combustion units is through the use of flue gas treatment or cleaning equipment. Such equipment includes electrostatic precipitators (ESP), fabric filter bag houses, selective catalytic reduction (SCR) systems, non-selective catalytic reduction (NSCR) systems, wet flue gas desulfurization (WFGD) systems and/or dry flue gas desulfurization (DFGD) systems, such as spray dryer absorber (SDA) systems.

In some flue gas treatment or cleaning systems, removal of acidic components, such as SOₓ, is facilitated through the use of a DFGD system, wherein a reagent slurry or solution is dispersed in a flue gas stream to react with the SOₓ present therein. Current DFGD systems utilize SDA vessels equipped with an atomizer system that receives a reagent slurry, typically in combination with a dilution liquid, for dispersal thereof within the vessel for contact with the flue gas. Upon contact, the reagent slurry reacts with the flue gas impurities resulting in a dry powder reaction product and a flue gas stream of reduced impurity content.

US 4226603 discloses an atomizing device arranged centrally in an atomizing chamber. A processing gas is supplied around the atomizing device through a conical guide duct communicating with a horizontal spiral duct through an annular mouth. Processing gas distribution is adjusted by deflection of the gas stream from the spiral duct into the conical guide duct by means of two separate sets of stationary guide vanes arranged relatively close to and overlaying each other in the mouth. A damper is arranged along the mouth to control the ratio of the portions of the gas stream conducted into each of the two vane sets.

US 4481171 discloses a spray reactor for flue gas desulfurization equipped with an atomizing disc to spray an alkaline reagent into the flue gas. Concentric inner and outer annular passages around the atomizing disc convey the flue gas. The outer passage flow is controlled by a series of dampers adapted to maintain a relatively constant flow velocity in the inner passage in response to turndown of the load.

US 4519990 discloses an atomizer located in an upper portion of a chamber for introducing a finely dispersed spray of aqueous medium, and a gas injection means for receiving a major portion of a hot gas stream for introduction circumferentially about the atomizer. An essential feature of the apparatus is that a minor portion of the hot gas stream is introduced into the chamber in a direction counter to the direction of swirl of the major portion of the hot gas stream passing downwardly through the chamber from about the atomizer.

US20110107912 discloses a spray dryer chamber equipped with a plurality of disperses mounted at a roof of the spray dryer chamber. Each disperser is operative for dispersing a portion of a hot process gas around a respective atomizer. The dispersers comprise a central disperser located at the center of the roof with a counter clockwise rotation, and at least three peripheral dispersers each with a clockwise rotation surrounding the central disperser.

US 4560543 discloses an absorption chamber in which a stream of waste gas is injected downwards from an upper part thereof with an aqueous liquid containing an absorbent atomized into the gas stream. The water content of the aqueous liquid is adjusted depending on the drying capacity of the downward gas stream so the drying of the atomized liquid produces a particulate material having a moisture content of at least 3 percent by weight, to at least 10 percent by weight. A second gas stream is introduced upwards from a bottom part of the absorption chamber at a rate sufficient for fluidizing the moist particulate material within the absorption chamber.

US 4571311 discloses a process gas treatment chamber with a pair of concentric, inner and outer annular gas inlet ducts surrounding a liquid spray apparatus. Partition means divide a spiral supply duct into independent inner and outer sub-ducts which define separate inner and outer flow passages connected respectively to the inner and outer annular gas inlet ducts. Damper means are provided in the inlet to the outer sub-duct to selectively control the flow of process gas there through as a means of maintaining the velocity of the flow of process gas through the inner flow passage at a minimum acceptable velocity.

US 4619404 discloses a gas distribution arrangement with a helical inlet duct through an annular orificial slit for processing gas introduction into a space between two coaxial guide walls. Guide vanes are provided in the orificial slit to impart a change of direction to the flow of processing gas. Each guide vane is a spatial body with differently extending, vertical limitation surfaces which between adjacent vanes delimit ducts whose sectional area as measured transversely of the flow direction of the processing gas through the individual duct is substantially of the same size over the extent of the duct. The vertical height of the guide vanes may decrease along their radial extent inwards in the orificial slit, and their vertical limitation surfaces may form an acute angle at the radially innermost ends of the guide vanes.

Delivery of a reagent slurry or solution to an SDA system for reaction with flue gas impurities produces a dry powder reaction product. This dry powder reaction product is typically separated from the flow of flue gas using an electrostatic precipitator or a fabric filter. Fabric filters frequently used in flue gas cleaning systems typically include a number of fabric filter bags. Flue gas flows through the fabric filter bags while dry powder reaction product, particles and/or dust entrained in the flue gas are stopped by the filter fabric and end up fixed on the outside of the fabric filter bags. When such a fabric filter bag has been in use for a while, the outside surfaces of the fabric filter bags are more or less caked with dry powder reaction product, particles and/or dust. As such, the fabric filter bags periodically need to be cleaned in order to maintain a proper passage of flue gas through the fabric. Cleaning of the fabric filter bags may take place by providing a pulse of compressed air to the inside of the fabric filter bags to quickly stretch the fabric thereby "shaking off" or "popping off" the caked material attached to the outside surfaces of the fabric filter bags. In order to be able to provide the pulses of compressed air to the fabric filter bags, a valve arrangement may be provided.

US 4,336,035 discloses a baghouse fabric filter for such purposes. The baghouse fabric filter of US 4,336,035 comprises a plurality of tubular fabric filter bags, each of which is retained in its tubular shape by a filter cage. Baghouse fabric filter cages may typically be up to tens of meters long.

EP 1779915 discloses a design of a baghouse fabric filter cage segment allowing several segments to be connected in series to form a baghouse filter cage.

EP 0 678 177 discloses a valve arrangement for connecting compressed-air pulses to vertically arranged, bag-shaped fabric filter bags for cleaning thereof.

While known SDA systems and fabric filter systems are useful for treating or cleaning flue gas, improvements thereto would be beneficial to industries requiring flue gas treatment or cleaning prior to flue gas release to the environment.

### Summary

Disclosed herein is a spray dryer absorber (SDA) and fabric filter integrated system (SDAFIS) that provides a significant reduction in plant construction costs and plant equipment footprint while improving plant efficiency. The subject SDAFIS is beneficial for treating or cleaning of flue gas at temperatures too high for other types of dry flue gas desulfurization (DFGD) systems. As such, the subject SDAFIS comprises a flue gas inlet in a SDA vessel for contact of the flue gas with a reagent slurry atomized within the vessel by a plurality of top mounted atomizers for a reaction therebetween to produce a dry powder reaction product. The dry powder reaction product is entrained in the flue gas for flow through adjustable damper openings common to both the SDA vessel and the fabric filter compartments, and into lower portions of the fabric filter compartments for upward flow of the flue gas through the fabric filter compartments before flowing outwardly through the fabric filter outlet. With the flow of flue gas through the fabric filter compartments, the dry powder reaction product, particles and/or dust entrained in the flue gas is separated from the flue gas by collecting on the outer surface of fabric filter bags housed within the fabric filter compartments. Treated or cleaned flue gas exiting the fabric filter outlet may flow into additional treatment or cleaning equipment, or if environmentally acceptable, released to the atmosphere.

Also disclosed herein is a method of using a SDAFIS to treat or clean flue gas. The subject method may be used to treat or clean flue gas at temperatures too high for other types of DFGD systems. As such, the subject method of using a SDAFIS comprises arranging a flue gas inlet in a SDA vessel for contact of the flue gas with a reagent slurry atomized within the vessel by a plurality of top mounted atomizers for a reaction therebetween to produce a dry powder reaction product, entraining the dry powder reaction product in the flue gas for flow through damper openings equipped with adjustable damper doors common to both the SDA vessel and the fabric filter compartments, and into lower portions of fabric filter compartments for an upward flow of the flue gas through the fabric filter compartments before flowing outwardly through a fabric filter outlet, separating the dry powder reaction product, particles and/or dust from the flue gas by collection thereof on the outer surface of fabric filter bags housed within the fabric filter compartments, and releasing treated or cleaned flue gas exiting the fabric filter outlet into additional treatment or cleaning equipment, or into the atmosphere.

In summary, the subject SDAFIS comprises a spray dryer absorber vessel or housing comprising an inlet, a plurality of atomizers, and a plurality of damper openings equipped with adjustable damper doors common to both the SDA housing and the fabric filter compartments, and, a plurality of fabric filter compartments each sharing a common wall with the spray dryer absorber housing and each fluidly connected to the spray dryer absorber via one or more of the plurality of adjustable dampers, and at least one common outlet shared by the plurality of fabric filter compartments. The plurality of atomizers within the spray dryer absorber housing is fluidly connected to a reagent slurry supply. The plurality of damper openings in the common wall shared by each the spray dryer absorber housing and the fabric filter compartments, each has an individually adjustable damper door. Also, the plurality of damper openings each has an individually adjustable damper door with mechanical position adjustment of the adjustable damper door electronically controlled by a control unit. The subject SDAFIS is operable with flue gas temperatures entering the system at about 240 °F (about 115 °C) to about 900 °F (about 482 °C), but more preferably from about 240 °F (about 115 °C) to about 600 °F (about 316 °C). The plurality of atomizers is electronically controlled by a control unit. The plurality of fabric filter compartments comprise a plurality of fabric filter bags about 6 meters (about 19 feet) to about 12 meters (about 40 feet), but most typically about 10 meters (about 33 feet) long, and a wire cage support. Further, the plurality of fabric filter compartments are periodically cleaned based on sensor measurements received by a control unit.

In summary, the subject method of using a SDAFIS comprises arranging a flue gas inlet in a spray dryer absorber vessel or housing for contact of flue gas with a reagent slurry atomized by atomizers within the spray dryer absorber housing for a reaction between the reagent slurry and pollutants in the flue gas to produce a dry powder reaction product, entraining the dry powder reaction product in the flue gas for flow of the dry powder reaction product in the flue gas through damper openings equipped with adjustable damper doors common to both the SDA housing and the fabric filter compartments, and into fabric filter compartments, separating the dry powder reaction product from the flue gas by passage of the flue gas through fabric filter bags within the fabric filter compartments with collection of the dry powder reaction product on an outside surface of the fabric filter bags producing a cleaned flue gas, and releasing the cleaned flue gas through a common outlet duct fluidly connected to the fabric filter compartments. The reaction between the reagent slurry and pollutants in the flue gas removes pollutants from the flue gas. The produced cleaned flue gas released through the common outlet duct is released for further treatment or cleaning or to the environment. Flue gas entering the flue gas inlet in the spray dryer absorber housing has a temperature of about 240 °F (about 115 °C) to about 900 °F (about 482 °C), but more preferably from about 240 °F (about 115 °C) to about 600 °F (about 316 °C). Each of the damper openings common to both the SDA housing and the fabric filter compartments arranged in a common wall shared by both the spray dryer absorber housing and the fabric filter compartments, is equipped with an adjustable damper door with mechanical adjustments in the position of the adjustable door electronically controlled by a control unit. Further, the damper openings are equipped with individually controlled adjustable damper doors with mechanical adjustments to the adjustable doors' positions electronically controlled by a control unit. The fabric filter bags within the fabric filter compartments are periodically cleaned based on sensor measurements received by a control unit.

### Brief Description of the Drawings

Referring now to the figures, example embodiments are provided and illustrated wherein:
FIGURE 1 is a schematic side view of an exemplified embodiment of a plant equipped with a spray dryer absorber and fabric filter integrated system;
FIGURE 2 is a schematic enlarged perspective view of the spray dryer absorber and fabric filter integrated system of FIGURE 1;
FIGURE 3 is a schematic enlarged side cross-sectional view of the spray dryer absorber and fabric filter integrated system of FIGURE 2 taken along line 3-3; and
FIGURE 4 is a schematic enlarged side cross-sectional view of the spray dryer absorber and fabric filter integrated system of FIGURE 2 taken along line 4-4.

Other details, objects, and advantages of the embodiments disclosed herein will become apparent from the following description of the exemplified embodiments illustrated, and exemplified methods associated therewith.

### Detailed Description

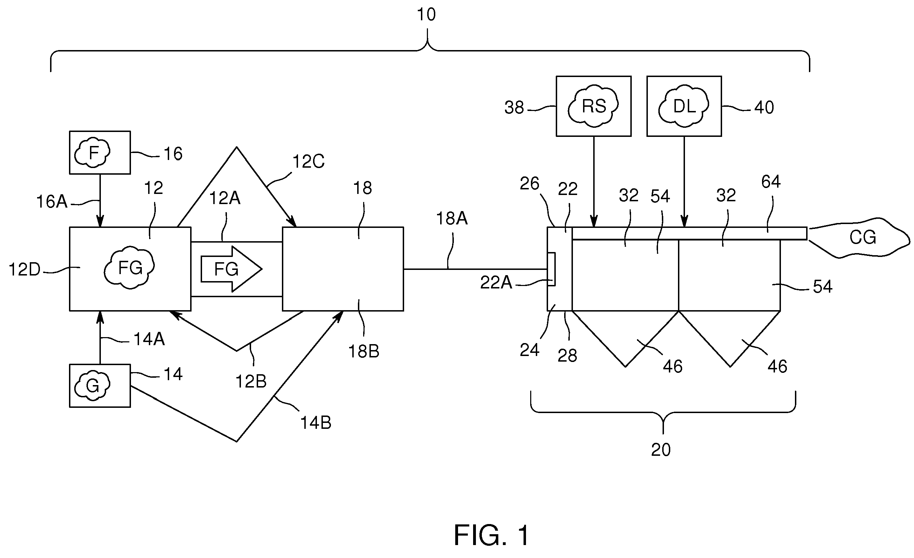

Referring to Figure 1, disclosed herein is a plant 10 such as a power plant or an industrial plant including a combustion unit 12, such as for purposes of an example, a steam producing boiler unit. The combustion unit 12 may be supplied at least one oxygen containing gas G, e.g., air, O₂ gas, or gases that include O₂ gas, from a gas supply 14 via a fluidly connected supply pipe 14A. Likewise, the combustion unit 12 is supplied a carbonaceous fuel F from a fuel supply 16 via a fluidly connected fuel duct 16A for combustion of the fuel F within the combustion unit 12. The fuel F supplied to combustion unit 12 is preferably a fossil fuel such as for example coal, oil, or natural gas. In addition to steam, flue gas FG is produced upon fuel F combustion within the combustion unit 12. Steam produced by fuel F combustion can be transported to a turbine (not shown) for use in generating electricity, or put to other uses such as for example district heating, combustion unit 12 pre-heating, or the like. Flue gas FG produced by fuel F combustion comprises acid gases, such as for example but not limited to sulfur oxides (SOₓ), and hydrogen chloride (HCl), ash, heavy metals and particulates. Flue gas FG produced in the combustion unit 12 flows out of an interior area 12D of the combustion unit 12 through a fluidly connected conduit 12A, and optionally, into an interior area 18B of a fluidly connected air pre-heater 18. Air pre-heater 18 is operable to transfer heat energy from the hot flue gas FG flowing therethrough to a heat transfer fluid HT also flowing therethrough. The heat transfer fluid HT may be steam, steam condensate, pressurized hot water, such a fluid from a waste heat source, or the like. The flow of the heat transfer fluid HT though the air pre-heater 18 is in a direction opposite that of the flow of hot flue gas FG through the air pre-heater 18. Heated heat transfer fluid HT is used within plant 10, such as for pre-heating needs associated with the operation of combustion unit 12. The heat transfer fluid HT is circulated within plant 10, with the heated heat transfer fluid HT flowing out of air pre-heater 18 via fluidly connected duct 12B into combustion unit 12 and the cooled heat transfer fluid HT flowing out of combustion unit 12 via fluidly connected duct 12C into air pre-heater 18. As an optional addition or alternative to using a heat transfer fluid HT in air pre-heater 18, the at least one oxygen containing gas G may be used in air pre-heater 18. As such, air pre-heater 18 is operable to transfer heat energy from the hot flue gas FG flowing therethrough to the at least one oxygen containing gas G, e.g., air, O₂ gas, or gases that include O₂ gas, from gas supply 14 circulated to air pre-heater 18 via a fluidly connected supply pipe 14B for flow therethrough. Flow of the at least one oxygen containing gas G through the air pre-heater 18 is in a direction opposite that of the flow of hot flue gas FG through air pre-heater 18. Heated at least one oxygen containing gas G is used within combustion unit 12 for added combustion unit 12 efficiency. For such purpose, the at least one oxygen containing gas G once heated within the air pre-heater 18, flows out of air preheater 18 via fluidly connected duct 12B into combustion unit 12. The at least one oxygen containing gas G then flows out of combustion unit 12 via fluidly connected conduit 12A into air pre-heater 18 as hot flue gas FG.

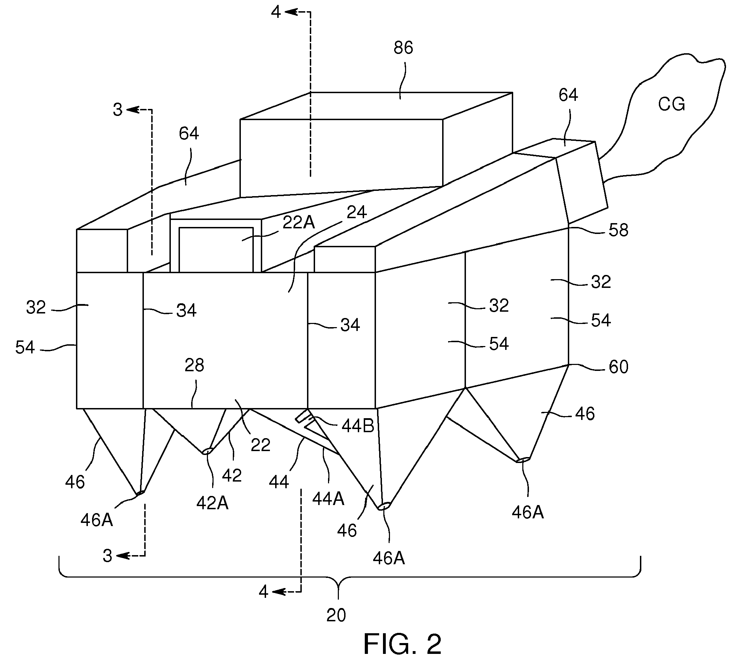

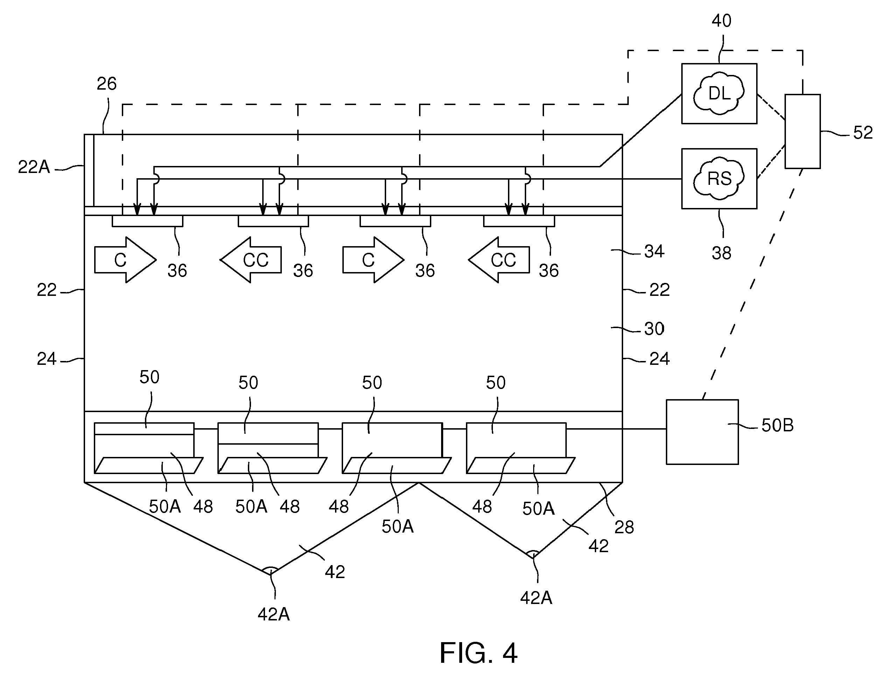

From interior area 18B of optional air pre-heater 18, a reduced temperature flue gas FG flows via fluidly connected duct 18A into the subject spray dryer absorber and fabric filter integrated system (SDAFIS) 20 via inlet 22A. As best illustrated in Figures 2 through 4, SDAFIS 20 comprises a spray dryer absorber (SDA) vessel or housing 22 with an inlet 22A fluidly connected to duct 18A. Housing 22 also comprises four side walls 24, a top 26 and a bottom 28 defining an interior area 30. Arranged in top 26 is a plurality of atomizers 36, which may be for example two to ten atomizers 36, but more preferably four to five atomizers 36 of varied clockwise C and counter clockwise CC rotation illustrated in Figure 4 by arrows. An example of an atomizer 36 suitable for the subject SDAFIS 20 is a rotary model atomizer commercially available from GE-Power, located in Erlanger, Kentucky, USA. Likewise, one or more commercially available atomizers 36 of a similar type, such as two-media nozzle atomizers or lances with multiple two-media nozzles, may likewise be utilized in the subject SDAFIS 20. Each atomizer 36 is arranged and fluidly connected to receive a reagent slurry RS from a reagent slurry supply 38, typically in combination with a dilution liquid DL from a dilution liquid supply 40. The atomizers 36 disperse the reagent slurry RS or combination of reagent slurry RS and dilution liquid DL within the housing 22 interior area 30 for intermixing contact with flue gas FG flowing therethrough. Upon contact with the flue gas FG, the reagent slurry RS reacts with the impurities in the flue gas FG thereby producing a dry powder reaction product RP and flue gas FG of a reduced impurity content. Optionally, bottom 28 is open to a plurality of hoppers 42, and/or ductwork 44 as illustrated in Figure 2 fluidly connecting bottom 28 to hoppers 46 or fabric filter compartments 32. Hoppers 42, 46 may be of various dimensions and type depending on system requirements and associated costs. The dry powder reaction product RP produced in the flue gas FG upon contact of the flue gas FG with the reagent slurry RS is largely entrained in the flue gas FG. However, depending on the SDAFIS 20 requirements, dry powder reaction product RP falling out of the flue gas FG may be collected in the hoppers 42 until periodically removed via outlet 42A or transported via ductwork 44 to hoppers 46 or fabric filter compartments 32. As such, ductwork 44 may be arranged to fluidly connect bottom 28 to hoppers 46 via duct 44A or to the fabric filter compartments 32 at damper openings 48 via duct 44B, illustrated in Figure 2.

The SDA housing 22 is flanked on two opposite side walls 24, with at least two fabric filter compartments 32. The SDA housing 22 and the at least two fabric filter compartments 32 share common walls 34, opposite side walls 24. The at least two fabric filter compartments 32 may be for example two to twelve fabric filter compartments 32, but more preferably six to ten fabric filter compartments 32, evenly divided between opposite side walls 24. Optionally, depending on the SDAFIS 20 requirements, fabric filter compartments 32 may be arranged on, and share as common walls 34, all four side walls 24 of housing 22. For purposes of clarity, in Figures 1 through 3, four fabric filter compartments 32 are illustrated, although a greater or lesser number of fabric filter compartments 32 may be found useful, depending on plant 10 and SDAFIS 20 requirements. Flue gas FG entrained with dry powder reaction product RP flows out from housing 22 interior 30 through a plurality of damper openings 48 into fabric filter compartments 32. Damper openings 48 are equipped with adjustable damper doors 50 to control the flow of flue gas FG therethrough. The adjustable damper doors 50 may be adjusted manually or using a mechanical device 50B electronically controlled and activated by a control unit 52. As such, each adjustable damper door 50 may be adjusted individually to control the flow of flue gas FG into a particular fabric filter compartment 32. A single adjustable damper door 50 may be fluidly connected to a particular fabric filter compartment 32 or multiple adjustable damper doors 50 may be fluidly connected to a particular fabric filter compartment 32 depending on the desired flow requirements of the SDAFIS 20. Through adjustment of one or more adjustable damper door(s) 50 to cover a greater portion of damper openings 48, flue gas FG flow to a fabric filter compartment 32 may be reduced. Through adjustment of one or more adjustable damper door(s) 50 to cover a lesser portion of damper openings 48, flue gas FG flow to a fabric filter compartment 32 may be increased. For purposes of maintenance and otherwise, all adjustable damper door(s) 50 to a fabric filter compartment 32 may be periodically adjusted to completely cover or close the damper opening(s) 48 to a fabric filter compartment 32, while other adjustable damper doors 50 to other fabric filter compartments 32 remain open to the extent desired, and operational.

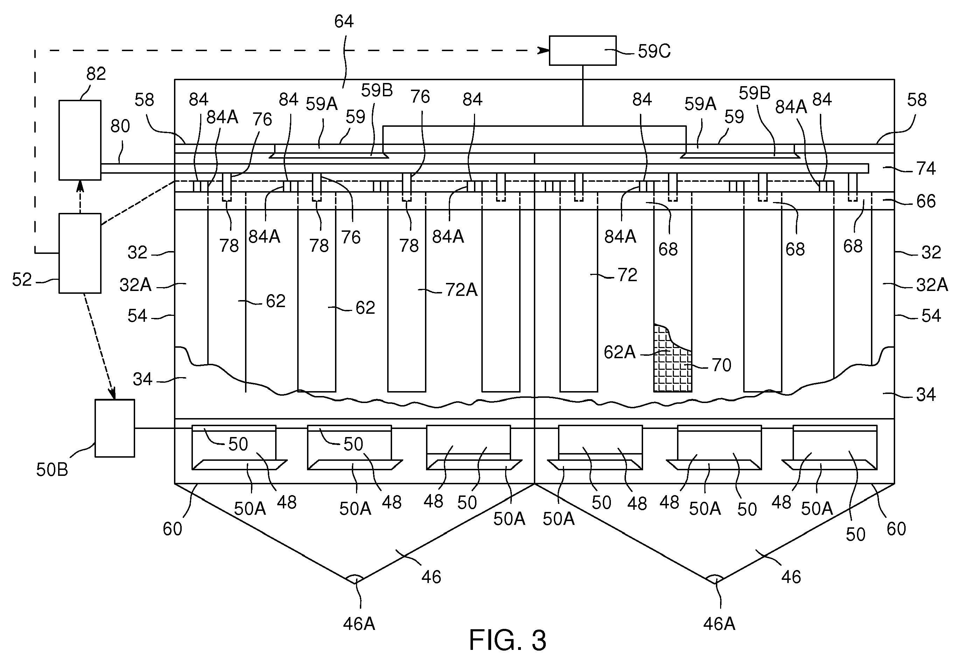

Damper doors 50 may be any type of door adjustable in position to increase coverage of damper openings 48 and decrease coverage of damper openings 48 depending upon plant 10 and/or SDAFIS 20 operating requirements. As such, a damper door 50 may comprise a singular manual or mechanically slidable panel, multiple manual or mechanically slidable panels, a single manual or mechanically rotatable louvered panel, or a plurality of manual or mechanically rotatable louvered panels, or the like to control flue gas FG flow. Optionally, guide vanes 50A to guide flue gas FG flow may be arranged at damper doors 50. Also, adjustable damper doors 50, may be individually mechanically adjusted in position through control unit 52 electronic signal control. The fabric filter compartments 32 include an interior area 32A defined by side walls 54 and a common wall 34, shown in break-away view in Figure 3, shared in common with housing 22. Side walls 54 between fabric filter compartments 32 are also common shared walls. Fabric filter compartments 32 also include a top 58 and a bottom 60. Fabric filter compartments 32 are dimensioned to accommodate a plurality of hanging fabric filter bags 62 about 6 meters (about 19 feet) to about 12 meters (about 40 feet), but most typically about 10 meters (about 33 feet), in length. Damper openings 48 are inlets into interior area 32A of fabric filter compartments 32. Flue gas FG with entrained dry powder reaction product RP and other particulates, such as ash and dust, flows out from housing 22 into fabric filter compartment 32 via damper openings 48. At top 58, each fabric filter compartment 32 includes an outlet damper opening 59, also equipped with an adjustable damper door 59A for control of flue gas FG flow therethrough, fluidly connected to a common outlet duct 64. Adjustable damper doors 59A may be any type of door manually or mechanically adjustable in position via mechanical device 59C to increase coverage of outlet damper opening 59 or to decrease coverage of outlet damper openings 59 depending upon plant 10 and/or SDAFIS 20 operating requirements. Operation of mechanical device 59C is electronically controlled via control unit 52. As such, an adjustable damper door 59A may comprise a singular manual or mechanically slidable panel, multiple manual or mechanically slidable panels, a single manual or mechanically rotatable louvered panel, or a plurality of manual or mechanically rotatable louvered panels, or the like to control flue gas FG flow. Optionally, guide vanes 59B to guide flue gas FG flow may be arranged at adjustable damper doors 59A. Also, like adjustable damper doors 50, adjustable damper doors 59A may be individually manually or mechanically adjusted in position via mechanical device 59C through control unit 52 electronic signal control. At bottom 60, each fabric filter compartment 32 includes a hopper 46 equipped with an outlet 46A. Within interior area 32A is a horizontal plate 66 with a plurality of openings 68 therethrough. Hanging fabric filter bags 62, one shown in break-away in Figure 3 with wire cage support 70, are removably attached in openings 68 in horizontal plate 66. Typically, a fabric filter compartment 32 may comprise 2 to 20,000 such fabric filter bags 62. In operation, flue gas FG with entrained dry powder reaction product RP and other particulates, such as ash and dust, flows through damper openings 48 into interior area 32A of fabric filter compartments 32. Within interior area 32A, the flue gas FG passes through the fabric 72 of the fabric filter bags 62, through openings 68 in horizontal plate 66 into the "clean" upper portion 74 of fabric filter compartment 32 thereby producing a cleaned flue gas CG. The cleaned flue gas CG flows from upper portion 74 of fabric filter compartment 32 through outlet damper openings 59 and into common outlet duct 64 for further treatment within plant 10 or release to the environment. The entrained dry powder reaction product RP and other particulates, such as ash and dust, for the most part do not pass through the fabric 72 of the fabric filter bags 62. As such, the entrained dry powder reaction product RP and other particulates, such as ash and dust, collect on the outside surface 72A of the fabric filter bags 62. Occasionally, it is necessary to remove collected or caked dry powder reaction product RP and other particulates from the outside surface 72A of the fabric filter bags 62. A pulsing gas duct 76 is arranged in the upper portion 74 of the fabric filter compartment 32. The pulsing gas duct 76 is provided with a pulsing nozzle 78 for each of the openings 68 with removably attached fabric filter bags 62. The pulsing gas duct 76 is connected to a valve arrangement 80 fluidly connected to a compressed gas supply 82, such as pressurized air. The compressed gas supply 82 typically has an absolute pressure of about 2 bars to about 6 bars, to be suitable for cleaning the outside surface 72A of fabric filter bags 62 with periodic blasts of pressurized air. These periodic blasts of pressurized air electronically controlled through the use of control unit 52, remove the collected or caked dry powder reaction product RP and other particulates from the outside surface 72A of the fabric filter bags 62. As such, control unit 52 determines the timing for removal of collected or caked dry powder reaction product RP and other particulates from the outside surface 72A of the fabric filter bags 62. Control unit 52 determines the timing for such removal based on, for example, a certain length of time having elapsed since the last removal, a certain pressure drop in flue gas FG flow as measured by pressure sensors 84 at openings 68, or a certain drop in temperature as measured by temperature sensors 84A at openings 68. Upon passage of a predetermined length of time measured by the control unit 52, the control unit 52 electronically signals the valve arrangement 80 to open for a short period of time, typically 150 to 500 ms. Alternatively, upon a predetermined pressure drop being measured by the pressure sensors 84 and received by control unit 52, the control unit 52 electronically signals the valve arrangement 80 to open for a short period of time, typically a period of time of 150 to 500 ms. As yet another alternative, upon a predetermined temperature drop being measured by the temperature sensors 84A and received by control unit 52, the control unit 52 electronically signals the valve arrangement 80 to open for a short period of time, typically a period of time of 150 to 500 ms. This opening of the valve arrangement 80 for a short period of time results in a short pulse of pressurized air or gas flowing through pulsing gas duct 76 and the respective fluidly connected pulsing nozzles 78, into the interior 62A of the fabric filter bags 62. As an effect of such pulse of pressurized air or gas, the fabric filter bags 62 expand rapidly, causing most, if not all, of the collected or caked dry powder reaction product RP and other particulates on the outside surface 72A of the fabric filter bags 62 to be released. The released dry powder reaction product RP and other particulates fall downwardly into hoppers 46 of the fabric filter compartments 32. Occasionally the dry powder reaction product RP and other particulates collected in hoppers 46 is removed and discarded in an environmentally conservative manner or removed for use elsewhere within plant 10.

The subject SDAFIS 20 as described herein offers many advantages over separate spray dryer absorber (SDA) equipment and fabric filter equipment known to those skilled in the art. The subject SDAFIS 20 significantly reduces construction costs through the use of a single common wall between the housing 22 and fabric filter compartments 32, and between the individual fabric filter compartments 32. Further construction costs are reduced through a reduction in the size of the housing 22 hoppers 42, or elimination of the hoppers 42 in favor of ductwork 44 to fabric filter compartment 32 or hoppers 46. The subject SDAFIS 20 also significantly reduces operation costs. Control unit 52 and other equipment or supplies, such as for example the compressed gas supply 82, for SDAFIS 20 operation may be arranged in a single "pent house" area 86 and used for both the spray dryer absorber operations within housing 22 and filtering operations in fabric filter compartments 32. As such, a significant reduction in the cost of steel, insulation, numbers of atomizers, and plant 10 footprint is realized with the subject SDAFIS 20. Further, the subject SDAFIS 20 is operable with flue gas FG temperatures far greater than that possible with some other types of flue gas FG treatment or cleaning equipment, thus making the use and cost of an air pre-heater 18 purely optional. The temperatures of flue gas FG entering inlet 22A of the SDAFIS 20 ranges from about 240 °F (about 115 °C) to about 900 °F (about 482 °C), but more preferably from about 240 °F (about 115 °C) to about 600 °F (about 316 °C).

Also disclosed herein is a method of using the subject SDAFIS 20 to treat or clean flue gas. The method comprises arranging a flue gas FG inlet 22A in a SDA vessel or housing 22 for contact of the flue gas FG with a reagent slurry RS atomized within the housing 22 by a plurality of top 26 mounted atomizers 36 for a reaction therebetween to produce a dry powder reaction product RP, entraining the dry powder reaction product RP in the flue gas FG for flow through damper openings 48 equipped with adjustable damper doors 50, and into fabric filter compartments 32 for an upward flow of the flue gas FG through the fabric filter compartments 32 before flowing outwardly through fabric filter outlet damper openings 59 also equipped with adjustable damper doors 59A, separating the dry powder reaction product RP, particles and/or dust from the flue gas FG by collection thereof on an outside surface 72A of fabric filter bags 62 housed within the fabric filter compartments 32, and releasing treated or cleaned flue gas CG exiting the fabric filter outlet damper openings 59 and common outlet duct 64 for release to the environment or additional treatment or cleaning in additional plant 10 equipment.

The method of using the subject SDAFIS 20 as described herein offers many advantages over separate spray dryer absorber (SDA) equipment and fabric filter equipment known to those skilled in the art. The method of using the subject SDAFIS 20 significantly reduces operational costs associated with operation and maintenance of two separate equipment systems, as well as the costs of operating and maintaining associated separate equipment such as sensors and fans, and the cost of ductwork linking the two separate equipment systems. According to the method of using the subject SDAFIS 20, flue gas FG flows directly into the housing 22 and then the fabric filter compartments 32 with little if any pressure drop or additional energy consumption for fans or other transport of the flue gas FG. Further, controlling SDAFIS 20 operation uses a common control unit 52 and associated equipment for both the spray dryer absorber operations within housing 22 and filtering operations in fabric filter compartments 32. Still further, operating the subject SDAFIS 20 is possible at flue gas FG temperatures far greater than that possible with some other types of flue gas FG treatment or cleaning equipment, thus making the use and cost of air pre-heater 18 purely optional.

In summary, the subject SDAFIS 20 comprises a spray dryer absorber housing 22 comprising an inlet 22A, a plurality of atomizers 36, and a plurality of damper openings 48 equipped with adjustable damper doors 50, a plurality of fabric filter compartments 32 each sharing a common wall 34 with the spray dryer absorber housing 22 and each fluidly connected to the spray dryer absorber housing 22 via one or more of the plurality of damper openings 48, and at least one common outlet 64 shared by the plurality of fabric filter compartments 32. The plurality of atomizers 36 within the spray dryer absorber housing 22 are fluidly connected to a reagent slurry supply 38. The plurality of damper openings 48 in the common wall 34 shared by each the spray dryer absorber housing 22 and the fabric filter compartments 32, each has an individually adjustable damper door 50. Also, the plurality of damper openings 48 each has an individually adjustable damper door 50, with mechanical position adjustment of the adjustable damper door 50 electronically controlled by a control unit 52. The subject SDAFIS 20 is operable with flue gas entering the SDAFIS 20 at temperatures of about 240 °F (about 115 °C) to about 900 °F (about 482 °C), but more preferably from about 240 °F (about 115 °C) to about 600 °F (about 316 °C). Operation of the plurality of atomizers 36 is electronically controlled by a control unit 52. The plurality of fabric filter compartments 32 comprise a plurality of fabric filter bags 62 about 6 meters (about 19 feet) to about 12 meters (about 40 feet) in length, but most typically about 10 meters (about 33 feet) in length, and each with a wire cage support 70. Further, the plurality of fabric filter compartments 32 are periodically cleaned based on a predetermined passage of time, upon sensor 84 pressure measurements, or upon sensor 84A temperature measurements received by a control unit 52.

In summary, the subject method of using a SDAFIS 20 comprises arranging a flue gas inlet 22A in a spray dryer absorber housing 22 for contact of flue gas FG with a reagent slurry RS atomized by atomizers 36 within the spray dryer absorber housing 22 for a reaction between the reagent slurry RS and pollutants in the flue gas FG to produce a dry powder reaction product RP, entraining the dry powder reaction product RP in the flue gas FG for flow of the dry powder reaction product RP in the flue gas FG through damper openings 48 and into fabric filter compartments 32, separating the dry powder reaction product RP from the flue gas FG by passage of the flue gas FG through fabric filter bags 62 within the fabric filter compartments 32 with collection of the dry powder reaction product RP on an outside surface 72A of the fabric filter bags 62 producing a cleaned flue gas CG, and releasing the cleaned flue gas CG through a common outlet duct 64 fluidly connected to the fabric filter compartments 32. The reaction between the reagent slurry RS and pollutants in the flue gas FG removes pollutants from the flue gas FG. The produced cleaned flue gas CG released through the common outlet duct 64 is released for further treatment or cleaning, or to the environment. Flue gas FG entering the flue gas inlet 22A in the spray dryer absorber housing 22 has a temperature of about 240 °F (about 115 °C) to about 900 °F (about 482 °C), but more preferably from about 240 °F (about 115 °C) to about 600 °F (about 316 °C). Each of the damper openings 48 arranged in a common wall 34 shared by both the spray dryer absorber housing 22 and the fabric filter compartments 32, is equipped with an adjustable door 50 with mechanical adjustments in the position of the adjustable door 50 electronically controlled by a control unit 52. Further, the damper openings 48 are equipped with individually controlled adjustable doors 50 with mechanical adjustments to the adjustable doors' 50 positions electronically controlled by a control unit 52. The fabric filter bags 62 within the fabric filter compartments 32 are periodically cleaned based on elapsed time, sensor 84 pressure measurements and/or sensor 84A temperature measurements received by a control unit 52.

While this invention has been described with reference to various exemplifying embodiments, it will be understood by those skilled in the art that various changes can be made and equivalents can be substituted for features thereof without departing from the scope of the disclosure. In addition, many modifications can be made to adapt a particular situation or material to the teachings of the disclosure without departing from the essential scope thereof. Therefore, it is intended that the disclosure not be limited to the particular exemplified embodiments disclosed herein as the best mode contemplated, but that the disclosure will include all embodiments falling within the scope of the appended claims.

## Claims

1. A spray dryer absorber and fabric filter integrated system (20) CH
ARACTERISED by
a spray dryer absorber housing (22) comprising:
an inlet (22A),
a plurality of atomizers (36), and
a plurality of damper openings (48),
a plurality of fabric filter compartments (32) each sharing a common wall (34) with the spray dryer absorber housing (22) and each fluidly connected to the spray dryer absorber housing (22) via one or more of the plurality of damper openings (48), and
at least one common outlet (64) shared by the plurality of fabric filter compartments (32).

2. The system (20) of claim 1, wherein the plurality of atomizers (36) are fluidly connected to a reagent slurry supply (38).

3. The system (20) of claim 1, wherein the plurality of damper openings (48) each has an individually adjustable damper door (50).

4. The system (20) of claim 1, wherein the system (20) is operable with flue gas entering the system (20) at temperatures of about 240 °F (about 115 °C) to about 900 °F (about 482 °C).

5. The system (20) of claim 1, wherein the plurality of damper openings (48) each has an individually adjustable damper door (50) electronically adjusted by a control unit (52).

6. The system (20) of claim 1, wherein operation of the plurality of atomizers (36) is electronically controlled by a control unit (52).

7. The system (20) of claim 1, wherein the plurality of fabric filter compartments (32) comprise a plurality of fabric filter bags (62) about 6 meters (about 19 feet) to about 12 meters (about 40 feet) in length, each with a wire cage support (70).

8. The system (20) of claim 1, wherein the plurality of fabric filter compartments (32) are periodically cleaned based on elapsed time or sensor (84) measurements received by a control unit (52).

9. A method of using a spray dryer absorber and fabric filter integrated system (20) **CH**
**ARACTERISED** by
arranging a flue gas inlet (22A) in a spray dryer absorber housing (22) for contact of flue gas with a reagent slurry atomized by atomizers (36) within the spray dryer absorber housing (22) for a reaction between the reagent slurry and pollutants in the flue gas to produce a reaction product;
entraining the reaction product in the flue gas for a flow of the reaction product in the flue gas through damper openings (48) common to the spray dryer absorber housing (22) and fabric filter compartments (32), and into the fabric filter compartments (32);
separating the reaction product from the flue gas by passage of the flue gas through fabric filter bags (62) within the fabric filter compartments (32) with collection of the reaction product on an outside surface (72A) of the fabric filter bags (62) producing a cleaned flue gas; and
releasing the cleaned flue gas through a common outlet duct (64) fluidly connected to the fabric filter compartments (32).

10. The method of claim 9, wherein the reaction between the reagent slurry and pollutants in the flue gas removes pollutants from the flue gas.

11. The method of claim 9, wherein cleaned flue gas released through the common outlet duct (64) is released for further treatment or cleaning.

12. The method of claim 9, wherein flue gas entering the flue gas inlet (22A) has a temperature of about 240 °F (about 115 °C) to about 900 °F (about 482 °C). .

13. The method of claim 9, wherein each of the damper openings (48) is equipped with an adjustable door (50) with mechanical adjustments electronically controlled by a control unit (52).

14. The method of claim 9, wherein each of the damper openings (48) is equipped with an individually controlled adjustable door (50) with mechanical adjustments to the adjustable door's position electronically controlled by a control unit (52).

15. The method of claim 9, wherein the fabric filter bags (62) within the fabric filter compartments (32) are periodically cleaned based on elapsed time and/or sensor (84) measurements received by a control unit (52).
